# FASCICULE DE BREVET EUROPEEN

(11) **EP 1 113 632 B1**
(45) Date de publication et mention de la délivrance du brevet: **21.03.2007**
(21) Numéro de dépôt: 00403517.6
(22) Date de dépôt: 14.12.2000
(51) Int. Cl.: H04L 12/64

(54) **Procédé et dispositif pour la restitution des signaux de parole transmis au début d'une communication téléphonique par l'échange de paquets**
Verfahrung und Vorrichtung zur Wiederherstellung von am Anfang einer Paketvermittelten Telefonübertragung gesendeten Sprachsignalen
Method and apparatus for restoring speech signals transmitted at the beginning of a telephonic communication with packet-switching

(30) Priorité: 27.12.1999 FR 9916527
(43) Date de publication de la demande: 04.07.2001
(73) Titulaire: ALCATEL, 75008 Paris (FR)
(72) Inventeur: Attimont, luc, 78100 Saint Germain en Laye (FR); Bodin, Jannick, 92380 Garches (FR)
(74) Mandataire: Lamoureux, Bernard

(56) Documents cités:
- EP-A- 0 921 666
- WO-A-95/22233
- US-A- 5 995 491

## Description

L'invention concerne un procédé destiné à faciliter la restitution sonore de signaux numérisés de son et plus particulièrement de signaux de parole qui sont transmis à un équipement terminal de télécommunications, au début d'une communication téléphonique établie par l'intermédiaire d'un réseau où ces signaux sont transmis sous forme de paquets et plus particulièrement d'une communication, dite VOIP, (pour "Voice Over Internet Protocol") établie selon le protocole Internet. Elle concerne aussi les matériels de télécommunications et notamment les équipements terminaux qui sont prévus pour permettre la mise en oeuvre de ce procédé au profit des usagers.

Comme il est connu, l'établissement d'une communication téléphonique, entre des usagers, par l'intermédiaire de terminaux reliés entre eux par l'intermédiaire d'un réseau de transmission par paquets, implique que les paquets correspondants aux signaux de parole relatifs à la communication établie en temps réel soient transmis d'une manière au moins approximativement périodique qui permettent une restitution sonore relativement fidèle et en particulier que, pour le moins, les paroles soient reproduites d'une manière suffisamment intelligible. Or, comme il est connu, la transmission de paquets entre deux terminaux par l'intermédiaire d'un réseau de transmission un tant soit peu chargé, ne permet pas d'assurer que les paquets soient reçus par leur destinataire à un rythme régulier correspondant à leur période de codage ou même dans l'ordre où ils ont été émis par l'envoyeur. Il y a classiquement des paquets transmis d'un équipement terminal à un autre qui sont retardés par rapport à d'autres d'une manière qui n'est pas utilement prévisible vue du terminal destinataire. De plus, il y a des risques de perte et des possibilités de duplication des paquets transmis. Ceci conduit donc à ce que les paquets reçus par un équipement terminal soient temporairement stockés au fur et à mesure de leur réception de manière à permettre la constitution d'un tampon de paquets au niveau duquel il est possible d'agir pour rétablir les paquets dans leur ordre initial, notamment après avoir attendu ceux qui sont attardés, lorsque le retard ne dépasse pas une valeur déterminée de seuil et après avoir éliminé les éventuels doublons. La transmission de signaux de parole, sous forme numérisée et par l'intermédiaire de paquets, est normalement possible par l'intermédiaire d'un réseau asynchrone d'échange de paquets. Elle implique cependant que soient respectées des contraintes temporelles en matière de délai et de périodicité, dès que ces signaux sont des signaux de parole relatifs à une communication établie en temps réel entre deux utilisateurs et qu'ils doivent être restitués sous forme sonore à un rythme déterminé, correspondant préférablement à celui ayant présidé à leur prise en compte.

La détermination de la taille du tampon au niveau duquel les paquets sont temporairement enregistrés au fur et à mesure de leur réception par un équipement implique que soit trouvé un bon compromis. En effet si le tampon est trop petit, le nombre de paquets successivement enregistrés, qui sont simultanément présents à un instant donné, est tel qu'il est alors possible que des paquets retardés ne soient pas reçus et donc stockés dans le tampon au moment où ils devraient être pris en compte au niveau de ce tampon pour être restitués sous forme sonore, après avoir été réorganisés comme initialement prévu. Les signaux sonores restitués dans ces conditions ne reproduisent pas fidèlement les signaux initialement capturés qui ont servi à les constituer. La qualité de service obtenue peut devenir inacceptable et les signaux sonores peuvent devenir difficilement intelligibles, lorsqu'ils correspondent à des signaux de parole. Si par contre, le tampon est grand de manière à éviter l'inconvénient indiqué ci-dessus, il peut y avoir un long délai avant que les signaux numérisés de son reçus soient réorganisés, comme initialement prévu, ce qui peut être perçu par les utilisateurs, dans le cas de signaux de parole relatifs à une communication téléphonique établie en temps réel. La qualité de service peut en être fortement dégradée et une communication téléphonique, établie dans de telles conditions, risque de se révéler pénible pour les usagers en communication.

Il est possible de modifier la taille d'un tampon dans un équipement actif en fonction des retards affectant les paquets reçus, de manière à augmenter cette taille, lorsqu'il y a des paquets qui arrivent trop tard pour être pris en compte et afin de pouvoir accepter les paquets arrivant par la suite avec un retard équivalent, ou simplement lorsque les retards affectant les paquets reçus augmentent en moyenne, ou encore lorsque la variation moyenne entre les retards successifs augmente. Une telle modification se base par exemple sur un traitement statistique des délais ayant affectés les derniers paquets reçus. Il est aussi possible de réduire la taille d'un tampon dans un équipement actif, lorsque les paquets arrivant sont reçus avec un retard plus faible que celui prévu et/ou lorsque les retards mesurés sur les paquets arrivants se tiennent dans une gamme de délais plus petite que celle alors prise en compte.

De telles adaptations de taille de tampon sont préférablement réalisées, au niveau du terminal destinataire, à l'occasion d'un silence du locuteur exploitant l'équipement terminal envoyeur, de manière à ne pas interférer avec le traitement des paquets de signaux reçus qui correspondent à de réels signaux de parole, la restitution de ceux-ci devant être la plus fidèle possible. Comme indiqué ci-dessus, ces adaptations peuvent être réalisées à partir d'une prise en compte des retards respectivement déterminés pour les derniers paquets reçus par l'équipement terminal. Le retard de chaque paquet est par exemple déterminé par prise en compte du temps auquel ce paquet a été envoyé, tel qu'indiqué par l'en-tête du message le contenant, et du temps d'arrivée constaté pour lui selon l'horloge système de l'équipement terminal où il est reçu. Ceci permet notamment de tenir compte des variations de charge intervenant notamment au niveau du réseau de transmission, ces variations pouvant être particulièrement importantes, dans le cas d'un équipement terminal qui communique par l'intermédiaire d'un réseau où le nombre de communications simultanément établies est susceptible de varier très rapidement, comme cela est le cas avec le réseau Internet.

Ce type de dispositif est connu par exemple du document EP-A-0 921 666.

La recherche d'un compromis satisfaisant, selon le procédé évoqué ci-dessus n'est possible qu'à partir du moment où un nombre suffisant de messages contenant des paquets de signaux de parole a été reçu, ce qui fait qu'il faut un certain laps de temps avant de pouvoir réellement adapter la taille d'un tampon de réception pour une communication donnée. Ceci est aggravé par le fait qu'il est couramment prévu de ne transmettre des paquets de signaux pour une communication téléphonie établie et à partir de chaque équipement terminal impliqué, que si des signaux de parole sont contenus dans les signaux de son à transmettre, et qu'en conséquence des signaux de parole sont inclus dans les paquets de signaux destinés à être transmis. Une telle disposition permet en effet de réduire de manière importante la charge d'un réseau, puisqu'il n'y a habituellement qu'un usager qui parle à un instant donné dans le cas d'une communication téléphonique établie entre deux usagers. De plus, ceci permet d'éviter la transmission de bruits parasites et notamment de bruits de fond, lorsque, temporairement, il n'y a pas de signaux de parole captés au niveau d'un équipement terminal utilisé par un usager alors silencieux.

Lorsqu'une telle disposition est exploitée, il n'y a pas de possibilité de présélectionner précisément une taille appropriée de tampon de réception au niveau d'un terminal destinataire, lors de l'établissement d'une communication, en particulier lorsque la gamme possible de retards pour les paquets est étendue pour le réseau servant à l'établissement des communications, ce qui est notamment le cas avec le réseau Internet. La qualité de service à l'établissement d'une communication risque donc de ne pas être assurée et les premières paroles risquent d'être inintelligibles, par exemple si elles sont tronquées.

L'invention propose donc un procédé destiné à améliorer la restitution sonore de signaux numérisés de parole, qui sont transmis à un équipement terminal de télécommunications, au début d'une communication téléphonique établie par l'intermédiaire d'un réseau de transmission où ces signaux sont transmis sous forme de paquets et notamment d'une communication VOIP établie sous protocole Internet IP, lorsque ladite communication est établie, à partir d'un équipement terminal de télécommunications, doté de moyens de détection d'activité vocale permettant de ne transmettre que des paquets de signaux numérisés contenant des paroles, à partir d'un ensemble de signaux de son susceptibles d'être transmis sous forme de paquets, après numérisation et codage, au niveau de l'équipement terminal.

Selon une caractéristique de l'invention, ce procédé prévoit une transmission de paquets de signaux à partir des moyens de numérisation et de codage, qui est réalisée sans tenir compte de la présence ou de l'absence de signaux de parole parmi les signaux à traiter, pendant une phase d'optimisation initiale de communication.

Selon l'invention, ce procédé prévoit de plus que la durée de la phase d'optimisation initiale de communication téléphonique, pendant laquelle sont transmis des paquets de signaux numérisés de son à partir d'un équipement terminal envoyeur sans tenir compte de la présence ou de l'absence de signaux de parole parmi les signaux à traiter, est choisie de manière à permettre à un équipement terminal récepteur de recevoir un nombre de paquets de signaux numérisés de son relatifs à la communication qui est suffisant pour permettre une détermination de la taille du tampon de réception de paquets de signaux numérisés de son, à partir d'une évaluation statistique fondée sur les retards déterminés pour les paquets reçus.

L'invention concerne aussi les matériels de télécommunications respectivement prévus pour permettre la mise en oeuvre de ce procédé, ces matériels comprenant les équipements terminaux d'abonné, de type terminal individuel ou équipement terminal commun, qui sont reliés à un réseau d'échange de paquets et qui sont prévus pour communiquer au travers du réseau avec un équipement terminal compatible au moyen de paquets de signaux numérisés incluant des signaux de parole numérisés produits dans le cadre d'une communication du genre VOIP, établie par l'intermédiaire du réseau sous protocole IP ou sous un protocole équivalent.

Selon une caractéristique de l'invention, chaque équipement terminal de ce genre comporte des moyens permettant la transmission, dès l'établissement d'une communication téléphonique et pendant une phase d'optimisation initiale, d'un nombre de paquets de signaux de son numérisés suffisant pour permettre à un équipement terminal récepteur de réaliser une détermination de taille de tampon de réception de paquets de signaux numérisés de son, à partir d'une évaluation statistique fondée sur les retards déterminés sur les paquets reçus, ainsi que des moyens de détermination d'activité vocale permettant de ne transmettre des signaux numérisés de son qu'à partir du moment où ils contiennent des signaux de parole, ces moyens de détermination d'activité vocale étant contrôlés de manière à n'agir que lorsque la phase d'optimisation initiale est terminée.

Selon l'invention, la durée de la phase d'optimisation initiale de communication téléphonique, pendant laquelle sont transmis des paquets de signaux numérisés de son à partir d'un équipement terminal envoyeur sans tenir compte de la présence ou de l'absence de signaux de parole parmi les signaux à traiter, est choisie de manière à permettre à un équipement terminal récepteur de recevoir un nombre de paquets de signaux numérisés de son relatifs à la communication qui est suffisant pour permettre une détermination de la taille du tampon de réception de paquets de signaux numérisés de son, à partir d'une évaluation statistique fondée sur les retards déterminés pour les paquets reçus.

L'invention concerne aussi le matériel de télécommunications, notamment de type équipement terminal d'abonné ou équipement terminal commun, qui est relié à un réseau permettant l'échange de paquets et qui est prévu pour communiquer au travers du réseau avec un équipement terminal compatible au moyen de paquets de signaux numérisés incluant des signaux de parole numérisés produits dans le cadre d'une communication téléphonique du genre VOIP, établie par l'intermédiaire du réseau sous protocole IP ou sous un protocole équivalent.

Selon une caractéristique de l'invention, ce matériel comporte des moyens au niveau d'une unité de gestion programmée permettant la transmission, dès l'établissement d'une communication téléphonique et pendant une phase d'optimisation initiale, d'un nombre de paquets de signaux de son numérisés suffisant pour permettre à un équipement terminal récepteur de réaliser une détermination de taille de tampon de réception de paquets de signaux numérisés de son, à partir d'une évaluation statistique fondée sur les retards déterminés sur les paquets reçus, ainsi que des moyens de détermination d'activité vocale permettant de ne transmettre des signaux numérisés de son qu'à partir du moment où ils contiennent des signaux de parole, ces moyens de détermination d'activité vocale étant contrôlés de manière à n'agir que lorsque la phase d'optimisation initiale est terminée.

L'invention, ses caractéristiques et ses avantages sont précisés dans la description qui suit en liaison avec les figures évoquées ci-dessous.

La figure 1 présente un schéma synoptique relatif à un ensemble de communication qui est constitué autour d'un réseau permettant l'échange d'informations sous forme de paquets de signaux numériques ou numérisés entre des équipements terminaux de télécommunications et plus particulièrement la mise en oeuvre du procédé selon l'invention.

La figure 2 présente un schéma synoptique relatif à un exemple d'ensemble regroupant les divers protocoles impliqués dans la mise en oeuvre du procédé selon l'invention.

Le procédé selon l'invention est prévu afin d'améliorer la restitution sonore de signaux numérisés de son qui sont transmis à un équipement terminal de télécommunications, au début d'une communication téléphonique établie par l'intermédiaire d'un réseau de transmission où ces signaux sont transmis sous forme de paquets. Il est plus particulièrement orienté vers la restitution des signaux de parole, dans la mesure où une restitution fidèle de ces signaux de parole, dès le début d'une conversation est particulièrement recherchée, pour des raisons évidentes d'intelligibilité. Le procédé selon l'invention est notamment destiné à être mis en oeuvre dans le cas de communication VOIP établie sous protocole Internet à partir d'un équipement terminal d'abonné 1, 1' ou 2, par l'intermédiaire d'un réseau de communication 3 assurant la transmission d'informations mises sous forme de paquets de signaux numériques ou numérisés. Comme il est connu ce réseau peut éventuellement être le réseau Internet ou un réseau public ou privé prévu pour permettre l'exploitation du protocole Internet IP ou d'un protocole qui peut être globalement considéré comme fonctionnellement équivalent, dans la mesure où il est prévu pour remplir le même genre de fonctions avec des moyens au moins approximativement correspondants.

Les équipements terminaux de télécommunications susceptibles de communiquer par l'intermédiaire du réseau de communication 3 au moyen de signaux relatifs à des informations qui sont transmis sous forme de paquets, sont susceptibles d'être très divers et plus particulièrement d'être des équipements correspondant à des terminaux individuels d'abonné, tels 1 et 1', qui permettent des communications téléphoniques entre des usagers sous la forme de conversations et qui impliquent des échanges de paquets contenant des signaux de parole numérisés entre les équipements terminaux impliqués. Des communications téléphoniques au cours desquels des paquets contenant des signaux numérisés peuvent aussi être réalisés entre un ou plusieurs terminaux individuels d'abonné et un équipement terminal commun, tel que 2, par exemple un équipement terminal constituant un centre d'appel vocal. Un tel équipement terminal commun peut aussi être, par exemple, un commutateur d'installation privée desservant une pluralité de terminaux individuels d'abonné.

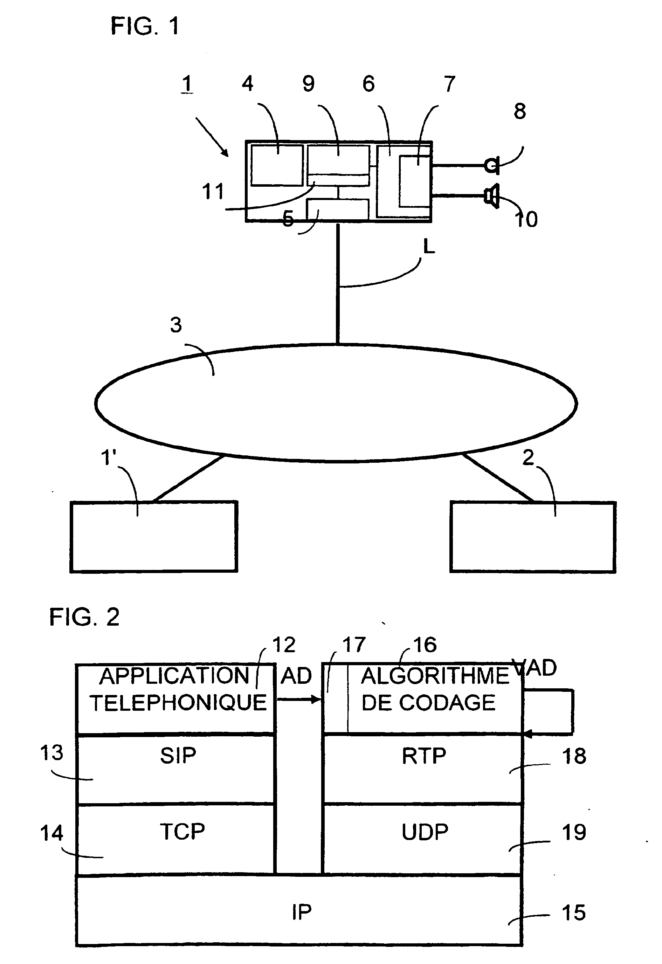

L'un des équipements terminaux ici envisagés est succinctement détaillé en liaison avec la figure 1, cet équipement 1 est ici supposé être un terminal individuel d'abonné 1. Il est, par exemple, relié au réseau de communication 3 par une liaison L qui est une ligne téléphonique. Ce terminal est, par exemple, relié au réseau de communication par l'intermédiaire d'une passerelle, ici supposée correspondre à un fournisseur de services Internet, classiquement désigné par l'acronyme anglais ISP (pour "Internet Service Provider"). La ligne téléphonique aboutit alors à un central téléphonique de rattachement qui dessert la passerelle, comme classique dans le cas d'un terminal relié au réseau Internet. La liaison L peut également être une liaison directe dans le cas d'un équipement terminal directement connecté au réseau de transmission de paquets proprement dit.

Le terminal 1 qui comporte classiquement une logique de gestion programmée 4, comporte aussi une interface de télécommunications 5. Cette interface est destinée à rendre possible l'établissement d'une communication de données numériques ou de signaux numérisés en départ ou en arrivée avec un autre équipement terminal au travers du réseau 3. Elle est classiquement équipée d'un modem en série avec la liaison L, si cette liaison est une ligne téléphonique analogique.

Le terminal 1 comporte une interface homme-machine 6 incluant des moyens audio 7 pour la prise en compte des signaux sonores et notamment des signaux de parole captés par un microphone 8 associé au terminal, en vue de leur transmission via la ligne téléphonique L, après codage et compression sous forme de paquets au niveau d'un codeur/décodeur 9. Les moyens audio permettent aussi la restitution sonore, par exemple par un haut-parleur 10, des signaux de son numérisé et plus particulièrement des signaux de parole numérisés, qui parviennent sous forme de paquets par la liaison L jusqu'au codeur/décodeur 9, à destination de l'utilisateur du terminal 1. L'aiguillage des paquets parvenant par l'intermédiaire de la ligne téléphonique L s'effectue dans le terminal 1 de manière à orienter les signaux de parole, après décompression et décodage, vers les moyens audio 7 et les données vers les moyens, non représentés, qui sont prévus pour permettre leur exploitation. Comme il est connu ces données sont exploitées se traduit par exemple par une application téléphonique utilisant l'interface homme-machine 6 et permettant entre autres la numérotation, l'établissement et la rupture d'une communication. Comme indiqué précédemment, les paquets de signaux numérisés de son qui sont reçus, sont temporairement stockés dans une mémoire, dite tampon de réception 11, associée au codeur/décodeur. Ce tampon de réception 11 est ici supposé être de taille modifiable, en fonction des besoins, sous le contrôle de la logique de gestion programmée 4 de l'équipement terminal qui le comporte, comme développé plus loin.

Dans une forme connue de réalisation où le terminal 1 est organisé autour d'un ordinateur, celui-ci est doté de programmes d'exploitation et de communication appropriés et par exemple d'un butineur, non représenté, qui lui permet d'envoyer des requêtes, usuellement établies selon le protocole HTTP, pour communiquer selon ses besoins en matière de communication avec d'autres équipements terminaux individuels ou partagés auxquels il accède via le réseau 3.

Bien entendu, d'autres appareils sont susceptibles d'être exploités en tant qu'équipements terminaux d'utilisateur 1 et en particulier des appareils de télécommunication voix-données, tels que ceux couramment désignés par l'expression anglaise "Screenphone".

Quel que soit son type, un équipement terminal, tel que 1, 1' ou 2, doit disposer de moyens logiciels lui permettant de communiquer par paquets. Ces paquets peuvent contenir des données ou des signaux numérisés de son.

Le procédé, selon l'invention, est plus particulièrement destiné à être exploité lorsque ces signaux numérisés de son comprennent des signaux numérisés relatifs à des paroles échangées au cours d'une communication téléphonique, c'est-à-dire en cas de conversation vocale établie en temps réel entre des équipements terminaux d'usager.

A cet effet, il est supposé que chaque équipement terminal, susceptible d'être impliqué dans de telles communications, dispose d'un ensemble de protocoles de contrôle de communication respectivement pour les signaux et paquets téléphoniques, pour les données et paquets de données, ainsi que pour la transmission des paquets via la liaison L

Deux piles protocolaires sont figurées, au-dessus d'une couche 15 correspondant au protocole IP sur la figure 2. L'une de ces couches concerne le contrôle de l'application téléphonique, proprement dite, l'autre concerne le traitement des signaux numérisés de son et plus particulièrement de parole

Le contrôle d'application téléphonique est réalisé au niveau d'une couche, cette couche d'application 12 est ici supposée prendre en charge l'interface homme-machine de l'équipement terminal. Ble permet de traiter des requêtes d'exploitation téléphonique, par l'intermédiaire de paquets et via le réseau de communication, par exemple pour la numérotation d'appel, la demande d'établissement de communication, la mise en attente, la conférence à trois, la rupture de communication, etc. Ble est à l'origine d'un signal caractéristique de communication établie AD, correspondant au moins approximativement au signal d'activation de la partie d'audio à l'établissement d'une communication dans un poste téléphonique à logique de gestion programmée. Ce signal AD est ici supposé rendu actif à l'établissement d'une communication entre terminaux et jusqu'à la rupture de cette communication.

Les requêtes émanant de la couche d'application 12 sont traitées dans le cadre d'une couche de transport combinant un protocole téléphonique 13, et un protocole de transfert 14 vers la couche de protocole IP. Ces protocoles 13 et 14 sont par exemple un protocole normalisé téléphonique SIP (pour "Simple Internet Protocol") et un protocole normalisé de transfert TCP (pour "Transmission Control Protocol") ou UDP (pour "User Datagram Protocol").

Le codeur/ décodeur vocal 9 exploite par exemple un algorithme de codage/décodage normalisé G723.1 ou G729, référencé 16 sur la figure 2, pour produire des paquets de signaux de parole numérisés à partir des signaux de parole, ici supposés captés par le microphone 8 du terminal, dans le cadre d'une communication téléphonique et pour reconstituer des signaux sonores et notamment vocaux à partir des paquets transmis au terminal via la liaison L Comme connu les signaux de parole captés sont échantillonnés, comprimés et codés afin de pouvoir être envoyés par paquets de manière périodique. Un signal de détection d'activité vocale VAD (pour "Voice Activity Detection") est produit, lorsque des signaux de parole, ici supposés provenir du microphone 9, sont en cours de codage. Cette détection d'activité est par exemple réalisée à l'aide d'un algorithme de détection de parole parmi du bruit. Les paquets de signaux de parole numérisés, obtenus par mise en oeuvre du procédé de codage, sont traités dans le cadre d'une couche de transport combinant par exemple deux protocoles normalisés RTP et UDP, respectivement référencés 18 et 19. Le protocole UDP définit le port de départ de paquets que constitue le codeur/décodeur 9 dans le terminal 1 et le port d'arrivée que constitue par exemple le codeur/décodeur de l'équipement terminal 1' pour les paquets de signaux numérisés de son et notamment de parole transmis depuis le terminal 1, lorsqu'il transmet via la liaison L, dans l'exemple choisi. Selon une implémentation de l'algorithme de codage de parole qui est réalisée pour la mise en oeuvre du procédé selon l'invention, un signal de détection d'activité vocale VAD est fourni lors du codage par le codeur/décodeur 9 d'un paquet de signaux de son à transmettre qui contient des signaux de parole. Ce signal VAD est obtenu par mise en oeuvre d'un algorithme de détection de parole ici symbolisé sous la référence 17 dans le cadre de l'algorithme de codage.

Le protocole UDP assure le transfert des paquets entre le protocole RTP et le protocole Internet IP, référencé 15, qui est exploité par le terminal pour ses transmissions de paquets au travers du réseau 3, via la liaison L Dans une forme de réalisation ici considérée, il est prévu que le signal de détection d'activité vocale VAD soit appliqué au niveau de l'interface entre l'algorithme de codage et la couche protocolaire 18, pour contrôler l'envoi des paquets de signaux numérisés de son produits au cours d'une communication téléphonique concernant une conversation réalisée en temps réel, de manière à ce que seuls soient transmis les paquets de signaux de sons numérisés qui contiennent des signaux de parole.

Selon l'invention, il est prévu que lors de l'établissement d'une communication téléphonique, c'est-à-dire d'une communication destinée à relier entre eux des usagers désireux de converser entre eux en temps réel, il soit réalisé une transmission de signaux numérisés de son, sans tenir compte de la présence ou de l'absence de signaux de parole parmi les signaux de son à traiter et ceci pendant une phase d'optimisation initiale de communication. Ceci est par exemple obtenu par déclenchement d'une temporisation par le passage à l'état actif du signal AD, caractéristique de l'établissement d'une communication. Cette temporisation est exploitée pour retarder le signal VAD et en conséquence à temporairement laisser transmettre les paquets de signaux de sons numérisés qui ne contiennent pas de signaux de parole en agissant au niveau de la sortie de l'algorithme de codage 16.

Ainsi par exemple dans le cas d'une communication téléphonique de type VOIP établie par l'intermédiaire d'un terminal 1 accédant au réseau par l'intermédiaire d'une liaison L de type liaison téléphonique analogique et donc via un modem, non représenté sur la figure 1, il est prévu que le début de la phase d'optimisation initiale de communication corresponde au moment où les deux équipements à relier commencent leurs échanges de paquets de signaux de sons l'un vers l'autre, dans le cadre de la communication téléphonique qui vient d'être établie.

La durée de phase d'optimisation initiale est ici supposée choisie d'une durée suffisante pour qu'il soit suffisamment probable qu'un équipement terminal, auquel des signaux numérisés de son sont envoyés, ait la possibilité d'avoir reçu un nombre de paquets de signaux numérisés de son dans le cadre d'une communication téléphonique en cours d'établissement, à partir duquel il puisse effectuer une détermination de taille de son tampon de réception. Cette détermination s'effectue par sélection, selon une programmation prédéterminée, en fonction d'une évaluation statistique fondée sur les retards déterminés pour les premiers paquets reçus de signaux de son numérisés. La durée d'une telle phase est, par exemple, de une seconde et elle est supposée calculée pour permettre la réception d'un nombre "N" de paquets qui est, par exemple, proche de 50, dans le cas de l'utilisation de l'algorithme de codage G729 avec transport de deux blocs de parole codés dans chaque paquet.

Comme indiqué précédemment, le retard d'un paquet se détermine aisément par prise en compte du temps auquel ce paquet a été envoyé, tel qu'indiqué par l'en-tête du message le contenant, et du temps d'arrivée constaté pour lui au niveau de l'équipement terminal où il est reçu. L'algorithme de traitement qui permet de déterminer la taille d'un tampon de réception, tel que 11, à partir d'une évaluation statistique des retards déterminés pour "N" paquets successivement reçus, n'est pas développé ici dans la mesure où il relève de la mise en oeuvre de connaissances qui sont considérées comme bien connues de l'homme de métier.

Le procédé selon l'invention permet d'adapter la taille du tampon de réception d'un équipement terminal, au début d'une communication téléphonique dans laquelle il est impliqué, en fonction des retards qui sont constatés pour les premiers paquets de signaux de son qu'il reçoit et alors que l'utilisateur de cet équipement n'a pas encore réellement commencé à communiquer vocalement. Il est ainsi possible d'éviter que les premières paroles prononcées soient déformées en raison d'une adaptation initiale inadéquate du tampon de réception de l'équipement terminal récepteur considéré. Dès la fin de cette phase d'optimisation initiale, il est prévu que seuls soient transmis les paquets de signaux numérisés de son qui contiennent des signaux de parole, en laissant alors agir les moyens de détection d'activité vocale prévus au niveau des équipements terminaux en communication. Bien entendu, des adaptations ultérieures de taille de tampon de réception sont susceptibles d'être effectuées ultérieurement, en fonction des besoins, au cours d'une communication et par exemple en profitant au niveau d'un équipement terminal des intervalles de temps pendant lesquels l'utilisateur en conversation reste silencieux.

Le procédé est bien entendu susceptible d'être mise en oeuvre dans différents matériels de télécommunications et notamment tant dans des équipements terminaux individuels d'abonné, tel que 1 ou 1' sur la figure 1, que dans des équipements communément exploités par et/ou pour plusieurs usagers, tel que 2, comme indiqué plus haut. Les équipements terminaux concernés sont ceux qui sont prévus pour communiquer au travers du réseau avec un équipement terminal compatible au moyen de paquets de signaux numérisés incluant des signaux de parole numérisés produits dans le cadre d'une communication VOIP ou de genre VOIP, établie par l'intermédiaire du réseau sous protocole IP ou sous un protocole équivalent. Ils sont prévus équipés des moyens logiciels et matériels tels que définis ci-dessus lors de la description relative au procédé selon l'invention.

Dans une forme de réalisation proposée ici, les équipements terminaux, prévus pour permettre la mise en oeuvre du procédé selon l'invention sont dotés de moyens de temporisation, réalisés de manière logicielle ou éventuellement matérielle, qui agissent sur les moyens de détermination d'activité vocale de l'équipement qui les comporte, pour que ces moyens de détermination n'interviennent qu'après la fin de la phase d'optimisation initiale prévue au début de chaque communication téléphonique établie. L'autre équipement terminal en communication est alors à même d'adapter la taille de son tampon de réception en fonction des retards qu'il constate au niveau des premiers paquets qu'il reçoit dans le cadre de cette communication et en conséquence d'optimiser la restitution sonore des signaux de parole qu'il reçoit en début de communication. L'action effectuée par les moyens de temporisation est par exemple une action de blocage réalisée au niveau du codeur/décodeur d'un équipement pour bloquer temporairement, les moyens de détection d'activité vocale de manière à permettre l'envoi des signaux numérisés de son sans tenir compte du fait qu'ils contiennent ou non des signaux de parole, en début de communication et pour une durée déterminée de phase d'optimisation initiale. Ce blocage est ici supposé réalisé au niveau de la sortie de l'algorithme de codage 16 et par action sur le signal de détection d'activité vocale par l'intermédiaire de l'algorithme de détection de parole référencé 17, dans le cas d'une communication de type VOIP

## Revendications

1. Procédé destiné à améliorer la restitution sonore de signaux de parole numérisés, dits de parole, qui sont transmis à un équipement terminal de télécommunications (1, 1' ou 2) au début d'une communication téléphonique établie par l'intermédiaire d'un réseau de communication (3) ou ces signaux sont transmis sous forme de paquets, et notamment au début d'une communication VOIP établie sous protocole Internet IP, lorsque ladite communication est établie, à partir d'un équipement terminal de télécommunications envoyeur, doté de moyens de détection d'activité vocale (16) permettant de ne transmettre que des paquets de signaux numérisés contenant des paroles à partir d'un ensemble de signaux de son susceptibles d'être transmis après numérisation et codage sous forme de paquets au niveau de l'équipement terminal envoyeur **caractérisé en ce qu'**il prévoit une transmission de paquets de signaux numérisés de son à partir des moyens de numérisation et de codage, qui est réalisée sans tenir compte de la présence ou de l'absence de signaux de parole parmi les signaux à traiter, pendant une phase d'optimisation initiale de communication.

2. Procédé, selon la revendication 1, dans lequel la durée de la phase d'optimisation initiale de communication téléphonique, pendant laquelle sont transmis des paquets de signaux numérisés de son à partir d'un équipement terminal envoyeur sans tenir compte de la présence ou de l'absence de signaux de parole parmi les signaux à traiter, est choisie de manière à permettre à un équipement terminal récepteur de recevoir un nombre de paquets de signaux numérisés de son relatifs à la communication qui est suffisant pour permettre une détermination de la taille du tampon de réception de paquets de signaux numérisés de son, à partir d'une évaluation statistique fondée sur les retards déterminés pour les paquets reçus.

3. Matériel de télécommunications, du type équipement terminal d'abonné (1) ou équipement terminal commun (2), qui est relié à un réseau (3) permettant l'échange de paquets et qui est prévu pour communiquer au travers du réseau avec un équipement terminal (1') compatible au moyen de paquets de signaux numérisés incluant des signaux de parole numérisés produits dans le cadre d'une communication téléphonique du genre VOIP, établie par l'intermédiaire du réseau sous protocole IP ou sous un protocole équivalent, **caractérisé en ce qu'**il comporte des moyens au niveau d'une unité de gestion programmée (4) permettant la transmission, dès l'établissement d'une communication téléphonique et pendant une phase d'optimisation initiale, d'un nombre de paquets de signaux de son numérisés suffisant pour permettre à un équipement terminal récepteur de réaliser une détermination de taille de tampon de réception de paquets de signaux numérisés de son, à partir d'une évaluation statistique fondée sur les retards déterminés sur les paquets reçus, ainsi que des moyens de détermination d'activité vocale (17) permettant de ne transmettre des signaux numérisés de son qu'à partir du moment où ils contiennent des signaux de parole, ces moyens de détermination d'activité vocale étant contrôlés de manière à n'agir que lorsque la phase d'optimisation initiale est terminée.

4. Matériel de télécommunications, notamment équipement terminal d'abonné (1) ou équipement terminal commun (7), selon la revendication 3, comportant des moyens de temporisation au niveau d'une unité de gestion programmée (4) agissant sur les moyens de détermination d'activité vocale de l'équipement pour que ces moyens de détermination n'agissent qu'après la fin d'une phase d'optimisation initiale de durée déterminée.

5. Matériel de télécommunications, notamment équipement terminal d'abonné (1) ou équipement terminal commun (7), selon la revendication 4, dans lesquels les moyens de temporisation agissent pour bloquer temporairement l'action des moyens de détermination d'activité vocale (17) jusqu'en fin de phase d'optimisation initiale de communication.

## Claims

1. A method of improving sound playback of digitized speech signals transmitted to a telecommunications terminal (1, 1' or 2) at the beginning of a telephone call set up over a communications network (3) where the signals are transmitted in the form of packets, and in particular at the beginning of a VOIP call set up under Internet protocol (IP), in the event said call is set up from a sending telecommunications terminal which is fitted with voice activity detection means (16) so as to be capable of transmitting only those digitized sound signal packets that actuary contain speech, which packets are taken from a set of sound signal packets that are available for being transmitted after the sound has been digitized and encoded in the sending terminal, the method being **characterized in that** it provides for digitized sound signal packets to be transmitted from the digitizing and encoding means without taking account of the presence or absence of speech signals in the processed sound signals during an initial stage of call optimization.

2. A method according to claim 1, in which the initial telephone call optimization stage during which digitized sound signal packets are transmitted from a sending terminal without taking account of the presence or absence of speech signals in the processed signals is of a duration that is selected in such a manner as to enable a receiving terminal to receive a sufficient number of digitized sound signal packets relating to the call to enable the size of the receive buffer for digitized sound signal packets to be determined on the basis of a statistical evaluation of the delays observed on the received packets,

3. Telecommunications hardware of the subscriber terminal (1) or common terminal (2) type, which is connected to a network (3) enabling packets to be exchanged and which is designed to communicate over the network with a compatible terminal (1') by means of digitized sound signal packets including digitized speech signals produced in the context of a VOIP type telephone call that is set up over the network under IP protocol or an equivalent protocol, the hardware being **characterized in that** it comprises means in a programmed control unit (4) enabling a number of digitized sound signal packets to be transmitted when a telephone call is set up and during an initial optimization stage, said number being sufficient to enable a receiver terminal to determine the size of a receive buffer for digitized sound signal packets by statistically evaluating the delays observed on the received packets, and voice activity determining means (7) enabling digitized sound signals to be transmitted only if they contain speech signals, said voice activity determining means being prevented from acting until the initial optimization stage has terminated.

4. Telecommunications hardware, in particular a subscriber terminal (1) or a common terminal (7), according to claim 3, having timing means in a programmed control unit (4) acting on the voice activity determining means of the terminal so that said means act only after the end of an initial optimization stage of determined duration.

5. Telecommunications hardware, in particular a subscriber terminal (1) or a common terminal (7), according to claim 4, in which the timing means act to temporarily inhibit the action of the voice activity determining means (17) until the end of the initial stage of call optimization.

## Patentansprüche

1. Verfahren zum Verbessern der akustischen Wiederherstellung von als Sprache bezeichneten digitalisierten Sprachsignalen, die an ein Telekommunikations-Endgerät (1, 1' oder 2) zu Beginn einer Telefonverbindung übertragen werden, die über ein Telekommunikationsnetz (3) hergestellt wird, in welchem diese Signale in Form von Paketen zu Beginn einer unter dem Internet-Protokoll (IP) hergestellten VOIP-Verbindung übertragen werden, wenn die besagte Verbindung von einem Sende-Telekommunikations-Endgerät aus hergestellt wird, das mit Mitteln zur Detektion von Sprachaktivität (16) versehen ist, die es gestatten, aus einer Menge von Tonsignalen, die nach Digitalisierung und Kodierung zu Paketen auf dem Sende-Endgerät übertragen werden können, nur solche Pakete von digitalisierten Signalen zu übertragen, die Sprache enthalten, **dadurch gekennzeichnet, daß** es eine Übertragung von Paketen aus digitalisierten Tonsignalen von Digitalisierungs- und Kodierungsmitteln aus vorsieht, die ohne Berücksichtigung des Vorhandenseins oder Fehlens von Sprachsignalen unter den zu verarbeitenden Signalen während einer anfänglichen Phase zur Optimierung der Verbindung bewerkstelligt wird.

2. Verfahren gemäß Anspruch 1, in welchem die Dauer der anfänglichen Phase zur Optimierung der Telefonverbindung, während derer digitalisierte Tonsignale von einem Sende-Endgerät aus ohne Berücksichtigung des Vorhandenseins oder Fohlens von Sprachsignalen unter den zu verarbeitenden Signalen übertragen werden, so gewählt wird, daß ein Empfangs-Endgerät eine Anzahl von Paketen aus digitalisierten Tonsignalen bezüglich der Verbindung empfangen kann, die ausreicht, um eine Ermittlung der Größe des Empfangspufferspeichers für digitalisierte Tonsignale anhand einer statistischen Auswertung zu ermöglichen, die auf den für die empfangenen Pakete ermittelten Verzögerungszeiten basiert.

3. Telekommunikations-Betriebsmittel vom Typ eines Teilnehmer-Endgeräts (1) oder eines gewöhnlichen Endgeräts (2), das mit einem Netz (3) verbunden ist, das den Austausch von Paketen gestattet, und das dafür vorgesehen ist, über das Netz mit einem Endgerät (1') zu kommunizieren, das mit dem Mittel digitalisierter Signalpakete einschließlich digitalisierter Sprachsignale, die innerhalb einer über das Netz unter dem Protokoll IP oder einem äquivalenten Protokoll hergestellten Telefonverbindung vom VOIP-Typ erzeugt werden, kompatibel ist, **dadurch gekennzeichnet, daß** es auf einer programmierten Verwaltungseinheit (4) Mittel beinhaltet, welche von der Herstellung einer Telefonverbindung an und während einer anfänglichen Optimierungsphase die Übertragung einer Anzahl von digitalisierten Tonsignalen ermöglichen, die ausreicht, um einem Empfangs-Endgerät eine Ermittlung der Größe des Empfangspufferspeichers für digitalisierte Tonsignale aus einer statistischen Auswertung zu ermöglichen, die auf den für die empfangenen Pakete ermittelten Verzögerungszeiten basiert, und daß es Mittel zur Detektion von Sprachaktivität (17) beinhaltet, die es gestatten, digitalisierte Tonsignale erst von dem Moment an zu übertragen, in dem sie Sprachsignale enthalten, wobei diese Mittel zur Detektion von Sprachaktivität so gesteuert werden, daß sie nur wirksam sind, wenn die anfängliche Optimierungsphase beendet ist.

4. Telekommunikations-Betriebsmittel, insbesondere ein Teilnehmer-Endgerät (1) oder ein gewöhnliches Endgerät (7), gemäß Anspruch 3, beinhaltend Verzögerungsmittel auf einer programmierten Verwaltungseinheit (4), die auf die Mittel zur Detektion von Sprachaktivität des Geräts wirken, damit diese Detektionsmittel erst nach dem Ende einer anfänglichen Optimierungsphase von festgelegter Dauer wirksam werden.

5. Telekommunikations-Betriebsmittel, insbesondere ein Teilnehmer-Endgerät (1) oder ein gewöhnliches Endgerät (7), gemäß Anspruch 4, in welchen die Verzögerungsmittel wirksam werden, um die Funktion der Mittel zur Detektion von Sprachaktivität (17) bis zum Ende der anfänglichen Verbindungs-Optimierungsphase vorübergehend zu blockieren,
